**Europäisches Patentamt**

**European Patent Office**

**Office européen des brevets**

(19)

(11) Numéro de publication : **0 167 467**
**B1**

(12) **FASCICULE DE BREVET EUROPÉEN**

(45) Date de publication du fascicule du brevet :
**11.01.89**

(21) Numéro de dépôt : **85440039.7**

(22) Date de dépôt : **06.06.85**

(51) Int. Cl.⁴ : **A 01 D 43/10,** A 01 D 43/00

(54) **Perfectionnement aux dispositifs de conditionnement de fourrage.**

(30) Priorité : **07.06.84 FR 8409095**

(43) Date de publication de la demande :
**08.01.86 Bulletin 86/02**

(45) Mention de la délivrance du brevet :
**11.01.89 Bulletin 89/02**

(84) Etats contractants désignés :
**DE GB IT NL SE**

(56) Documents cités :
**EP--A-- 0 086 317**
**AT--B-- 296 675**
**DE--A-- 2 051 689**
**FR--A-- 1 560 047**

(73) Titulaire : **KUHN S.A.**
**4, Impasse des Fabriques**
**F-67700 Saverne (FR)**

(72) Inventeur : **L'inventeur a renoncé à sa désignation**

Jouve, 18, rue St-Denis, 75001 Paris, France

## Description

La présente invention concerne un dispositif de conditionnement de fourrage comportant un certain nombre d'électrodes disposées transversalement à la direction de circulation du fourrage et reliées à un système de pilotage, lesdites électrodes étant aptes à créer un champ d'étincelles et/ou électrique au travers duquel passe le fourrage à conditionner.

Un tel dispositif est décrit dans la EP-A-0.086.317. Ce dispositif connu doit, grâce à des étincelles et/ou des décharges électriques, conditionner le fourrage en vue de diminuer la durée de son cycle de séchage. L'avantage que comporte ce dispositif de conditionnement par rapport aux dispositifs connus auparavant, réside dans le fait que le fourrage est traité de manière plus douce. De cette sorte, les pertes de matières nutritives sont plus réduites.

Le but de la présente invention est de proposer un système de pilotage des différentes électrodes de ce dispositif de conditionnement du fourrage.

Dans ce but, le dispositif de conditionnement de fourrage selon l'invention est caractérisé par le fait que :

a) les électrodes sont réparties par groupes d'électrodes et sont reliées en parallèle à l'intérieur de chaque groupe d'électrodes ;

b) le système de pilotage comporte plusieurs cellules composées chacune de capacités chargées par des diodes, puis déchargées successivement par des thyristors, ainsi que plusieurs bobines dans lesquelles se déchargent successivement lesdites cellules qui sont alimentées chacune par une phase d'une source de tension à plusieurs phases, lesdites phases étant déphasées l'une par rapport à l'autre ; et

c) chaque bobine est reliée à un groupe d'électrodes correspondant pour fournir plusieurs fois par période à ce groupe d'électrodes la tension nécessaire à la production d'étincelles et/ou de décharges électriques.

Chaque groupe d'électrodes est ainsi soumis à un nombre substantiel de fois à la tension nécessaire pour produire une étincelle ou une décharge électrique. Dans chaque groupe, l'étincelle ou la décharge électrique se produit à l'électrode qui, à l'instant de l'application de la tension, offre le moins de résistance à ladite étincelle ou à ladite décharge électrique. Globalement, on obtient un bon conditionnement du fourrage.

Du reste, comme les capacités de chaque cellule et les différentes cellules elles-mêmes se déchargent successivement dans les bobines, le nombre de moyens nécessaires est relativement réduit.

D'autres caractéristiques de l'invention apparaîtront dans les sous-revendications et dans la description suivante d'un exemple de réalisation non limitatif de l'invention et en référence au dessin annexé sur lequel :

— La figure 1 représente une vue latérale d'un dispositif de conditionnement selon l'invention équipant une faucheuse,

— La figure 2 représente une vue de dessus de la machine de la figure 1,

— La figure 3 représente un schéma du principe de base du système de pilotage qui équipe la machine des figures 1 et 2,

— La figure 4 représente un schéma utilisant le principe de base de la figure 3, et qui permet une multiplication du nombre d'étincelles ou de décharges électriques,

— La figure 5 représente un schéma utilisant le montage de la figure 4, et qui montre une manière supplémentaire de multiplier le nombre d'étincelles ou de décharges électriques,

— La figure 6 représente un schéma utilisant le montage des figures 4 et 5, et qui montre une manière supplémentaire de multiplier le nombre d'étincelles ou de décharges électriques,

— La figure 7 représente un schéma utilisant le montage de la figure 6, et qui montre une manière supplémentaire de multiplier le nombre d'étincelles ou de décharges électriques.

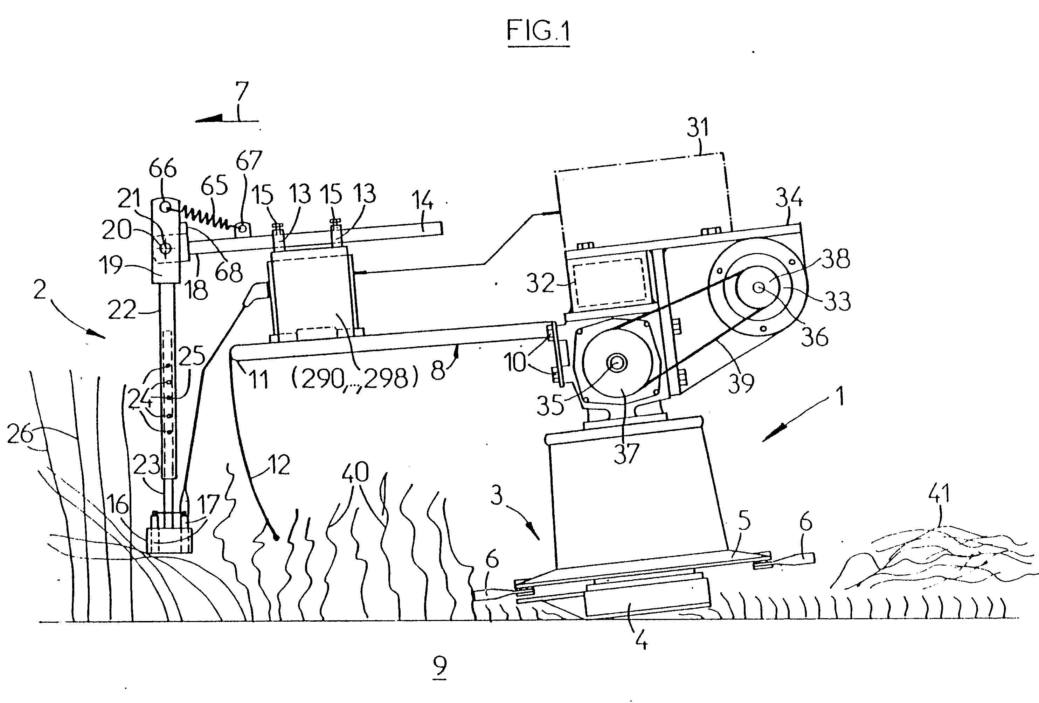

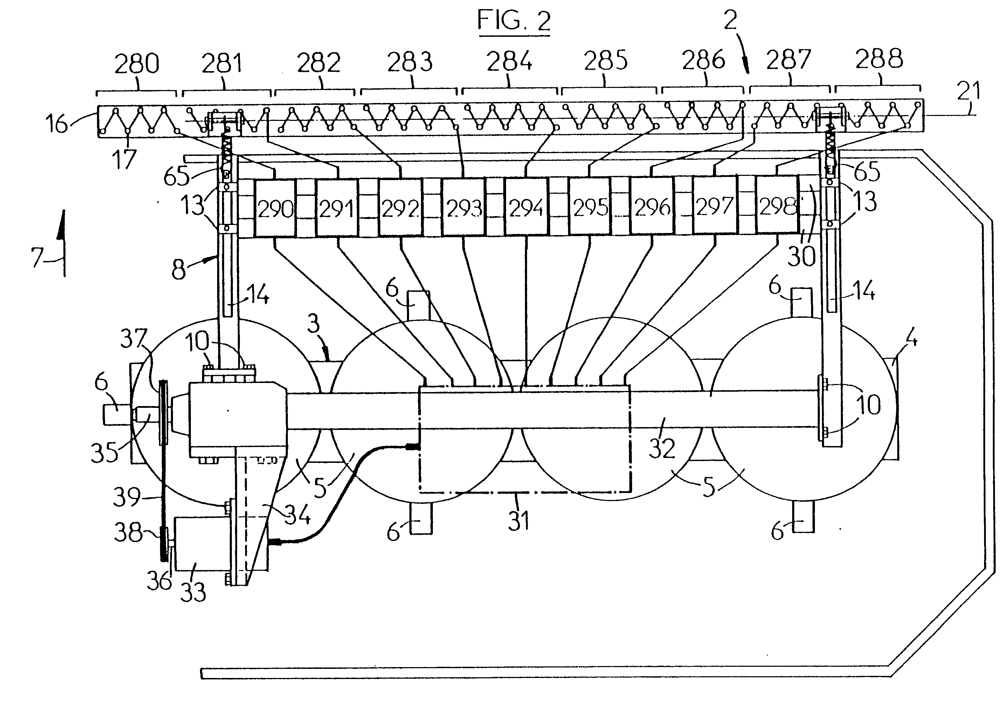

Sur les figures 1 et 2 est représentée schématiquement une machine qui se compose d'une faucheuse (1) et d'un dispositif de conditionnement du fourrage (2). La faucheuse (1) comporte notamment un mécanisme de coupe (3) qui se compose d'un carter (4) surmonté par des supports rotatifs (5) munis d'outils de coupe (6). On ne sortira bien entendu pas du cadre de l'invention si le mécanisme de coupe (3) est d'une autre nature.

Devant le mécanisme de coupe (3), compte tenu du sens d'avancement (7) pendant le travail, s'étend le dispositif de conditionnement (2). Ce dispositif de conditionnement (2) est, dans l'exemple, supporté par le bâti (32) situé au-dessus du mécanisme de coupe (3), au moyen d'une structure (8). La structure (8) s'étend à une certaine distance du sol (9) et est fixée sur le bâti (32) à l'aide de vis (10) par exemple. A son extrémité libre (11), la structure (8) supporte une toile de protection (12) qui pend librement vers le bas. Cette toile (12) sert à freiner ou stopper les projections de corps que peuvent occasionner les supports rotatifs (5) ou les outils de coupe (6). La structure (8) supporte deux paires de paliers (13) qui s'étendent à une certaine distance l'une de l'autre. A travers chaque paire de paliers (13) s'étend une tige (14) qui est susceptible de glisser le long de son axe longitudinal, lequel s'étend sensiblement parallèlement à la direction d'avance (7). Le glissement des tiges (14) dans les paliers (13) peut être condamné au moyen des vis (15) par exemple.

A l'avant, compte tenu du sens d'avance (7), les tiges (14) supportent la barre (16) portant les électrodes (17). La liaison entre la barre (16) et les tiges (14) est réalisée de la manière suivante.

L'extrémité avant (18) de chaque tige (14) s'étend entre les ailes d'une chape (19) et y est liée au moyen d'un axe (20). Les deux axes (20) définissent un axe de pivotement (21) qui s'étend transversalement à la direction d'avance (7). Chaque chape (19) est liée à l'extrémité d'un tube (22) s'étendant vers le bas et dans lequel est enfilée une tige (23) fixée sur la barre (16). Les tubes (22) comportent une pluralité de trous (24) dans l'un desquels est enfoncée une goupille (25) qui traverse également un trou aménagé dans la tige (23) correspondante.

Un ressort (65) tend à faire pivoter la barre (16) autour de l'axe (21), dans le sens de travail (7). A cet effet, les chapes (19) et les tiges (14) comportent respectivement des points d'accrochage (66, 67) auxquels est accroché le ressort (65). Le pivotement de la barre (16) dans le sens de la flèche (7) est limité par une butée (68).

De cette sorte, la position optimale de la barre (16) portant les électrodes (17), correspondant à des conditions de travail déterminées, peut être facilement réglée. En effet, grâce aux paliers (13), la barre (16) peut être plus ou moins éloignée du mécanisme de coupe (3). De même, grâce aux trous (24) aménagés dans les tubes (22), la barre (16) peut être plus ou moins rapprochée de la surface du sol (9).

Comme la barre (16) peut pivoter vers l'arrière à l'encontre du ressort (65), elle peut donc s'effacer en cas de rencontre avec un obstacle quelconque qu'elle peut rencontrer pendant le travail.

La fonction des électrodes (17) est de produire des étincelles ou des décharges électriques dans le fourrage non coupé (26), en vue d'accélérer son séchage après sa coupe par les outils de coupe (6). Le sol (9) représente la masse. Sur la figure 2, on voit que les électrodes (17) sont réunies en groupes d'électrodes (280, 281, ..., 288). Les électrodes (17) de chaque groupe (280, 281, ..., 288) sont branchées en parallèle. Chaque groupe (280, 291, ..., 288) est relié à une bobine (290, 291, ..., 298) ou tout autre système équivalent capable de créer une tension suffisante pour produire une étincelle à l'une des électrodes (17). Les bobines (290, 291, ..., 298) sont supportées par la structure (8) qui comporte à cet effet une traverse (30) sur laquelle les bobines (290, 291, ..., 298) sont par exemple boulonnées.

Les bobines (290, 291, ..., 298) sont alimentées par un boîtier électrique (31) fixé sur le bâti (32) de la machine. Le contenu du boîtier électrique (31) sera décrit ultérieurement plus en détail. Ce boîtier électrique (31) est alimenté en courant électrique par un alternateur (33) fixé sur la machine au moyen d'un support (34). L'entraînement en rotation de l'alternateur (33) est réalisé à partir d'un arbre d'entrée (35) qui reçoit lui-même le mouvement d'une source motrice qui peut par exemple être constituée par la prise de force d'un tracteur agricole non représenté entraînant la machine. Cet arbre d'entrée (35) peut d'ailleurs être le même que celui qui transmet le mouvement au mécanisme de coupe (3). La transmission du mouvement depuis la source motrice jusqu'à l'arbre d'entrée (35) est à la portée de l'homme de l'art. La liaison entre l'arbre d'entrée (35) et l'arbre (36) de l'alternateur (33) se fait à l'aide d'un mécanisme de transmission tel que poulies (37, 38) et courroie (39) par exemple.

La machine qui vient d'être décrite, fonctionne de la manière suivante. Pendant le travail, une source tractrice telle qu'un tracteur agricole par exemple, déplace la machine dans le sens de la flèche (7). La source tractrice qui peut en même temps comporter la source motrice telle que la prise de force du tracteur, entraîne en rotation l'arbre d'entrée (35). Cet arbre d'entrée (35) distribue le mouvement au mécanisme de coupe (3) et à l'alternateur (33). La rotation de l'arbre (36) de l'alternateur (33) produit le courant électrique nécessaire au boîtier électrique (31). Le système électrique logé dans le boîtier électrique (31) pilote les différentes bobines (290, 291, ..., 298) qui attaquent les groupes d'électrodes (280, 281, ..., 288) et produisent des étincelles et/ou des décharges électriques dans le fourrage (26). Le fourrage conditionné (40) est ensuite coupé par le mécanisme de coupe (3), puis déposé en un andain (41) derrière ledit mécanisme de coupe (3) où il va sécher grâce l'action du soleil et du vent.

Dans l'exemple décrit, le conditionnement du fourrage est réalisé avant la coupe de celui-ci. On ne sortira bien entendu pas du cadre de l'invention si le conditionnement du fourrage est réalisé après la coupe.

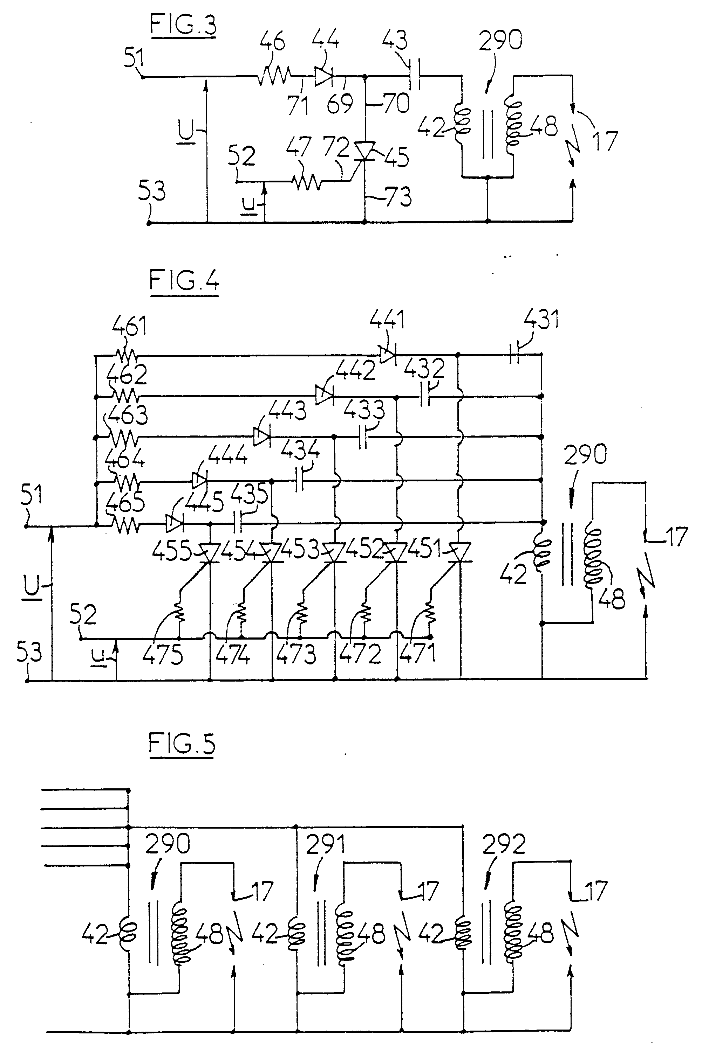

Les figures 3 à 7 montrent le système électrique logé à l'intérieur du boîtier électrique (31).

La figure 3 illustre le principe de base. Le primaire (42) d'une bobine (290) par exemple est relié à une borne d'une capacité (43) ou tout système équivalent. L'autre borne de cette capacité (43) est reliée d'une part à la cathode (69) d'une diode (44) ou tout système équivalent, et d'autre part à l'anode (70) d'un thyristor (45) ou tout système équivalent. L'anode (71) de la diode (44) est branchée à l'une des bornes d'une résistance (46). On applique à la borne libre (51) de la résistance (46) une tension U. La fonction de la résistance (46) est de protéger la diode (44). Pour ce qui est du thyristor (45), sa gâchette (72) est branchée à l'une des bornes d'une résistance de commande (47), à la borne libre (52) de laquelle on applique une tension u. La cathode (73) du thyristor (45) est branchée à la masse définie par la borne (53). Les tensions U et u sont déphasées d'une valeur égale à $\pi$ et la valeur de la tension U est supérieure à celle de la tension u.

Ce circuit fonctionne de la manière suivante. Pendant l'alternance où la diode (44) est passante, on charge la capacité (43). Comme la tension u est déphasée par rapport à la tension U, le thyristor (45) est bloqué. A la fin de cette alternance pendant laquelle la diode (44) est passante, cette diode se bloque. Au bout d'un instant dont la valeur dépend de la valeur de la résistance de commande (47), le thyristor (45) devient passant et la capacité (43) se décharge alors brusquement dans le primaire (42) de la bobine (290). Cela a pour effet de créer, au secondaire (48) de la bobine (290), la tension nécessaire pour produire une étincelle à l'électrode (17).

Comme décrit plus haut, le thyristor (45) ne devient passant qu'au bout d'un certain instant dont la longueur dépend de la valeur de la résistance de commande (47). Il est donc possible de décharger plusieurs capacités dans la même bobine mais à des instants différents. C'est ce qu'illustre la figure 4.

Sur cette figure, on voit cinq capacités (431, ..., 435) dont une borne est reliée au primaire (42) d'une bobine (290). L'autre borne de chaque capacité (431, ..., 435) est reliée d'une part à la cathode de sa diode (441, ..., 445) et d'autre part, à l'anode de son thyristor (451, ..., 455) respectif. L'anode de chaque diode (441, ..., 445) est reliée à l'une des bornes de sa résistance (461, ..., 465) correspondante, tandis qu'à l'autre borne des résistances (461, ..., 465) toutes reliées au point (51), on applique une tension U.

La gâchette de chaque thyristor (451, ..., 455) est reliée à l'une des bornes de sa résistance de commande (471, ..., 475) respective et on applique à l'autre borne des résistances de commande toutes reliées au point (52), une tension u déphasée par rapport à la tension U et de valeur plus faible que celle-ci. La cathode des différents thyristors (451, ..., 455) est reliée à la masse. La valeur des diverses résistances de commande (471, ..., 475) est différente.

On voit donc que le circuit représenté sur la figure 4 est composé de cinq circuits primaires tels que représentés sur la figure 3 mais dont la valeur de la résistance de commande (47) est différente d'un circuit primaire à l'autre.

Le circuit décrit sur la figure 4 fonctionne de la manière suivante. Pendant l'alternance où les diodes (441, ..., 445) sont passantes, on charge les capacités (431, ..., 435). Comme la tension u est déphasée par rapport à la tension U, les thyristors (451, ..., 455) sont bloqués. A la fin de cette alternance pendant laquelle les diodes (441, ..., 445) sont passantes, celles-ci se bloquent. A partir de ce moment, il se produit alors le phénomène suivant. Au bout d'un certain instant, le premier thyristor (451) devient passant alors que les autres thyristors (452, ..., 455) sont toujours bloqués puisque la valeur de leur résistance de commande (472, ..., 475) est différente de celle de la résistance de commande (471) du thyristor (451). La première capacité (431) se décharge alors dans le primaire (42) de la bobine (290) et crée au secondaire (48) la tension nécessaire pour produire une étincelle à l'électrode (17). Après ce cycle, c'est le deuxième thyristor (452) qui devient passant, les thyristors (453, ..., 455) étant toujours bloqués. C'est alors la deuxième capacité (432) qui se décharge dans le primaire (42) de la bobine (290) et crée à son tour au secondaire (48) la tension nécessaire pour produire une autre étincelle à l'électrode (17). Puis le même cycle va se produire successivement avec les thyristors (453, 454, 455).

On voit donc qu'avec ce montage on arrive à créer cinq étincelles pendant une période.

Les valeurs des résistances de commande (471, ..., 475) ne doivent pas être trop rapprochées l'une de l'autre. De cette sorte, on obtient effectivement des étincelles distinctes. En pratique, il s'est avéré que le système fonctionnait de manière satisfaisante avec cinq décharges de capacités au cours d'une alternance d'un courant alternatif de 50 Hertz.

La figure 5 montre qu'on peut brancher plusieurs bobines en parallèle. En pratique, il s'est avéré que les résultats étaient satisfaisants avec trois bobines (290, 291, 292). Chaque capacité (431, ..., 435) se décharge donc simultanément dans les trois bobines (290, 291, 292). Avec ce montage, il est donc possible de produire de manière satisfaisante quinze étincelles par période d'un courant alternatif de 50 Hertz.

Par ailleurs, il est possible de charger plusieurs capacités avec une même diode. De même, il est possible de commander la décharge de plusieurs capacités avec un même thyristor.

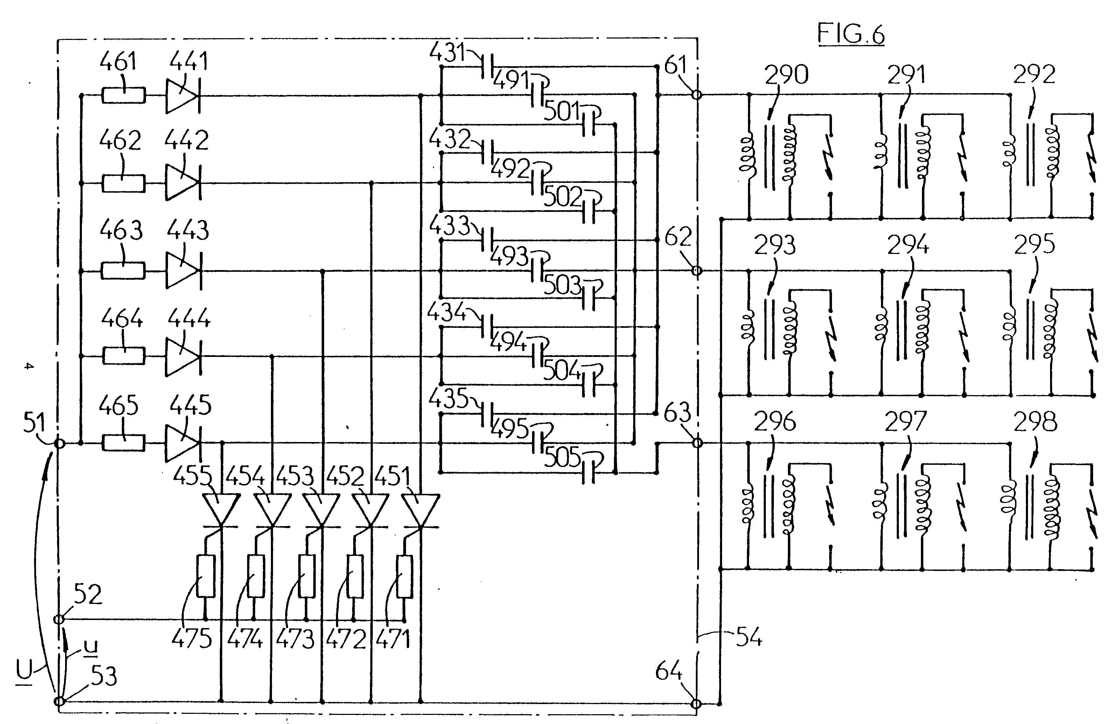

Sur la figure 6, chaque diode (441, ..., 445) charge simultanément son groupe respectif de trois capacités ((431, 491, 501), ..., (435, 495, 505)). De même, chaque thyristor (451, ..., 455) commande la décharge simultanée d'un même groupe de trois capacités ((431, 491, 501), ..., (435, 495, 505)). Les premières capacités (431, ..., 435) des différents groupes se déchargent dans un premier ensemble de trois bobines (290, 291, 292) en parallèle, les deuxièmes capacités (491, ..., 495) des différents groupes se déchargent dans un deuxième ensemble de trois bobines (293, 294, 295) en parallèle, et les troisièmes capacités (501, ..., 505) des différents groupes se déchargent dans un troisième ensemble de trois bobines (296, 297, 298) en parallèle. Ainsi, chaque thyristor (451, ..., 455) peut commander la génération simultanée de neuf étincelles. Compte tenu du fait que la cellule (54) comporte cinq thyristors, on génère donc quarante cinq étincelles par période d'un courant alternatif de 50 Hertz.

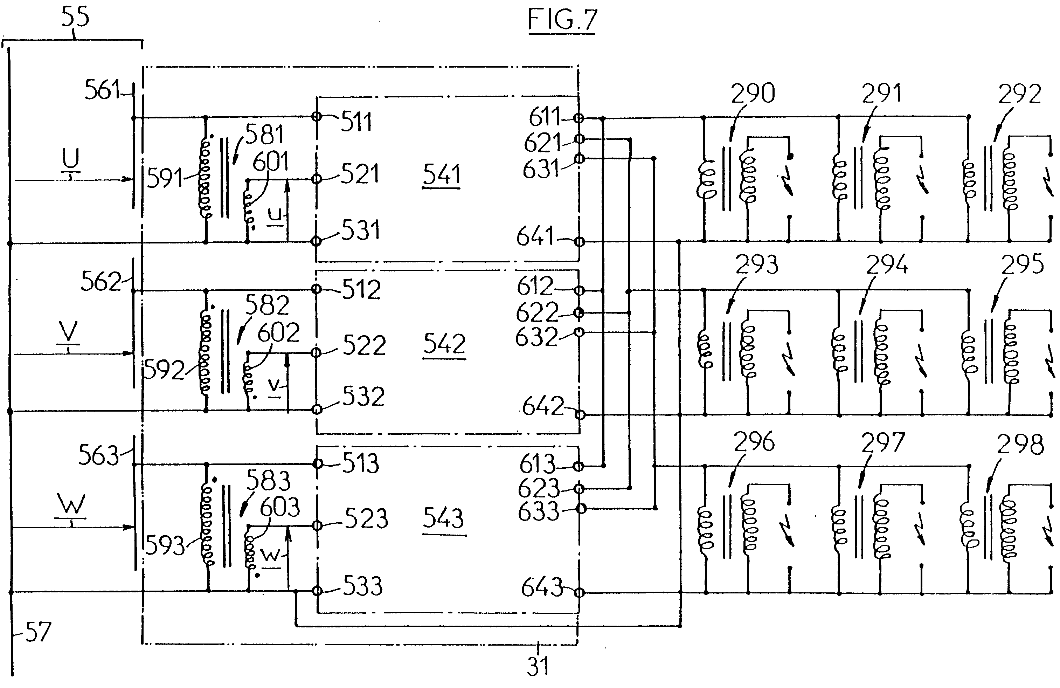

La figure 7 montre le système électrique complet tel qu'il est logé dans le boîtier électrique (31) (voir figures 1 et 2). Ce système électrique comporte trois cellules (541, 542, 543) telles que définies sur la figure 6. Le système électrique est alimenté par une source de tension triphasée (55). Chaque cellule (541, 542, 543) est alimentée par une phase (561, 562, 563), ce qui consiste à alimenter la borne (511) de la cellule (541) par la phase (561), la borne (512) de la cellule (542) par la phase (562), et la borne (513) de la cellule (543) par la phase (563). Les bornes (531, 532, 533) des cellules (541, 542, 543) sont reliées à la masse (57). Afin d'appliquer à chaque borne (521, 522, 523) une tension de valeur plus petite et déphasée de π par rapport à la tension qui est appliquée aux bornes (511, 512, 513), on a agencé des transformateurs déphaseurs (581, 582, 583). Les primaires (591, 592, 593) des transformateurs déphaseurs (581, 582, 583) sont branchés sur la phase (561, 562, 563) qui alimente la cellule (541, 542, 543) correspondante, tandis que les secondaires (601, 602, 603) desdits transformateurs déphaseurs (581, 582, 583) sont branchés sur les bornes (521, 522, 523) de la cellule (541, 542, 543) correspondante.

Chaque cellule (541, 542, 543) comporte quatre bornes de sortie ((611, 621, 631, 641), ..., (613, 623, 633, 643)). Les bornes (611, 612, 613) alimentent le premier ensemble de trois bobines (290, 291, 292), les bornes (621, 622, 623) alimentent le deuxième ensemble de bobines (293, 294, 295), et les bornes (631, 632, 633) alimentent le troisième ensemble de bobines (296, 297, 298). Les bornes (641, 642, 643) constituent la masse et sont donc reliées à la masse des bobines (290, ..., 298).

Avec ce montage, on génère donc cent trente cinq étincelles pendant une période, tout en n'employant qu'un minimum de composants.

En effet, ceci est possible, car les trois phases (561, 562, 563) sont déphasées entre elles. Ainsi, pendant qu'on charge les capacités de deux cellules, les capacités de la troisième cellule se déchargent dans les bobines (290, ..., 298).

Le secondaire (48) de chaque bobine (290, ..., 298) alimente un groupe de plusieurs électrodes (17) branchées en parallèle. A l'intérieur d'un même groupe d'électrodes, l'étincelle ou la décharge électrique se produit à l'électrode qui, à l'instant de l'application de la tension, offre le moins de résistance à ladite étincelle ou à ladite décharge électrique. Globalement avec la répartition aléatoire des étincelles sur les différentes électrodes, on obtient un bon conditionnement du fourrage avec un nombre de moyens restreint.

De ce fait, le prix de revient du système électrique reste modéré.

Dans l'exemple qui vient d'être décrit, chaque groupe de capacités comporte trois capacités. On ne sortira nullement du cadre de l'invention si les groupes comportent plus ou moins de trois capacités. De même, le nombre de capacités par groupe pourra être différent d'un groupe à l'autre.

Par ailleurs, dans l'exemple, chaque capacité d'un même groupe se décharge simultanément dans un ensemble de trois bobines montées en parallèle.

On ne sortira pas non plus du cadre de l'invention si une ou plusieurs ou toutes les capacités d'un même groupe se déchargent dans plusieurs ensembles de bobines montées en parallèle.

D'autre part, les ensembles de bobines pourront comporter plus ou moins de trois bobines en parallèle.

De même, le nombre de thyristors par cellule pourra être inférieur ou supérieur à cinq.

Enfin tous perfectionnements ou modifications pourront être apportés à la présente invention sans qu'on sorte pour autant de son cadre, tel que défini par les revendications.

**Revendications**

1. Dispositif de conditionnement de fourrage (2) comportant un certain nombre d'électrodes (17) disposées transversalement à la direction de circulation du fourrage (7) et reliées à un système de pilotage (31, 290, ..., 298), lesdites électrodes (17) étant aptes à créer un champ d'étincelles et/ou électrique au travers duquel passe le fourrage à conditionner, caractérisé par le fait que :

a) les électrodes (17) sont réparties par groupes d'électrodes (280, ..., 288) et sont reliées en parallèle à l'intérieur de chaque groupe d'électrodes ;

b) le système de pilotage comporte plusieurs cellules (541, 542, 543) composées chacune de capacités (431, ..., 435, 491, ..., 495, 501, ..., 505) chargées par des diodes (441, ..., 445), puis déchargées successivement par des thyristors (451, ..., 455), ainsi que plusieurs bobines (290, ..., 298) dans lesquelles se déchargent successivement lesdites cellules (541, 542, 543) qui sont alimentées chacune par une phase (561, 562, 563) d'une source de tension à plusieurs phases, lesdites phases étant déphasées l'une par rapport à l'autre ; et

c) chaque bobine (290, ..., 298) est reliée à un groupe d'électrodes (280, ..., 288) correspondant pour fournir plusieurs fois par période à ce groupe d'électrodes la tension nécessaire à la production d'étincelles et/ou de décharges électriques.

2. Dispositif de conditionnement de fourrage selon la revendication 1, caractérisé par le fait que chaque cellule (541, 542, 543) comporte plusieurs groupes de capacités ((431, 491, 501), ..., (435, 495, 505)) qui sont chacun chargés par une diode (441, ..., 445) respective, puis déchargés successivement par un thyristor (451, ..., 455) correspondant dont chacun est piloté par une résistance de pilotage (471, ..., 475) correspondante, chacune des capacités (431, ..., 435), (491, ..., 495) et (501, ..., 505) desdits groupes de capacités se déchargeant dans un ensemble de bobines (290, ..., 292), (293, ..., 295) et (296, ..., 298) à l'intérieur de chacun desquels les bobines sont branchées en parallèle.

3. Dispositif de conditionnement de fourrage selon la revendication 2, caractérisé par le fait que le système de pilotage comporte cinq thyristors (451, ..., 455) par cellule (541, 542, 543) lorsqu'il est alimenté par une tension alternative de 50 Hertz.

4. Dispositif de conditionnement de fourrage selon la revendication 2 ou 3, caractérisé par le fait que chaque ensemble de bobines comporte trois bobines.

5. Dispositif de conditionnement de fourrage selon au moins l'une des revendications 1 à 4, caractérisé par le fait qu'il est associé à un mécanisme de coupe (3).

6. Dispositif de conditionnement de fourrage selon la revendication 5, caractérisé par le fait qu'il s'étend devant le mécanisme de coupe (3).

7. Dispositif de conditionnement de fourrage selon la revendication 6, caractérisé par le fait qu'il traite le fourrage avant que le mécanisme de coupe (3) ne coupe ledit fourrage.

8. Dispositif de conditionnement de fourrage selon au moins l'une des revendications 1 à 7, caractérisé par le fait que les électrodes (17) sont montées sur un support (16) dont la position par rapport au sol (9) peut être réglée.

9. Dispositif de conditionnement de fourrage selon au moins l'une des revendications 5 à 8, caractérisé par le fait que les électrodes (17) sont montées sur un support (16) dont la position par rapport au mécanisme de coupe (3) peut être réglée.

10. Dispositif de conditionnement de fourrage selon au moins l'une des revendications 1 à 9, caractérisé par le fait que les électrodes (17) sont montées sur un support (16) qui peut tourner autour d'un axe (21) s'étendant transversalement au sens d'avance (7) et plus haut que le support.

11. Dispositif de conditionnement de fourrage selon la revendication 10, caractérisé par le fait que le support (16) peut pivoter autour de l'axe (21) dans un sens opposé au sens d'avance (7), à l'encontre d'un ressort (65).

12. Dispositif de conditionnement de fourrage selon la revendication 10 ou 11, caractérisé par le fait que le pivotement du support (16) autour de l'axe (21) dans le sens d'avance (7) est limité par une butée (68).

13. Dispositif de conditionnement de fourrage selon au moins l'une des revendications 1 à 12, caractérisé par le fait que le courant électrique qui lui est nécessaire est fourni par un alternateur (33) intégré audit dispositif.

14. Dispositif de conditionnement selon les revendications 5 et 13, caractérisé par le fait que l'alternateur (33) est entraîné par les moyens d'entraînement du mécanisme de coupe (3).

## Claims

1. A device (2) for conditioning fodder, which includes a certain number of electrodes (17) arranged transversely to the direction (7) of movement of the fodder and connected to a piloting system (31, 290, ..., 298) the said electrodes (17) being suitable for creating a spark and/or electric field through which the fodder to be conditioned passes, characterized by the fact that :

a) the electrodes (17) are distributed by electrode groups (280, ..., 288) and are connected in parallel within each electrode group ;

b) the piloting system includes a number of cells (541, 542, 543) each composed of capacitors (431, ..., 435, 491, ..., 495, 501, ..., 505) which are charged through diodes (441, ..., 445) and then discharged in succession through thyristors (451, ..., 455), as well as a number of coils (290, ..., 298) into which the said cells (541, 542, 543) are discharged in succession, each cell being fed by one phase (561, 562, 563) of a polyphase source of voltage, the said phases having a phase shift with respect to one another ; and

c) each coil (290, ..., 298) is connected to a corresponding electrode group (280, ..., 288) in order to supply a number of times per cycle to this electrode group the voltage necessary to the production of sparks and/or electric discharges.

2. A device for conditioning fodder as in Claim 1, characterized by the fact that each cell (541, 542, 543) includes a number of capacitor groups ((431, 491, 501), ..., (435, 495, 505)) each of which is charged through a respective diode (441, ..., 445) and then discharged in succession through a corresponding thyristor (451, ..., 455) each of which is piloted by a corresponding piloting resistor (471, ..., 475), each of the capacitors (431, ..., 435), (491, ..., 495) and (501, ..., 505) of the said capacitor groups being discharged into a set of coils (290, ..., 292), (293, ..., 295) and (296, ..., 298) within each of which the coils are connected in parallel.

3. A device for conditioning fodder as in Claim 2, characterized by the fact that the piloting system includes five thyristors (451, ..., 455) per cell (541, 542, 543) when it is fed by a 50-cycle alternating voltage.

4. A device for conditioning fodder as in Claim 2 or 3, characterized by the fact that each set of coils includes three coils.

5. A device for conditioning fodder as in at least one of the Claims 1 to 4, characterized by the fact that it is associated with a cutter mechanism (3).

6. A device for conditioning fodder as in Claim 5, characterized by the fact that it extends in front of the cutter mechanism (3).

7. A device for conditioning fodder as in Claim 6, characterized by the fact that it treats the fodder before the cutter mechanism (3) cuts the said fodder.

8. A device for conditioning fodder as in at least one of the Claims 1 to 7, characterized by the fact that the electrodes (17) are mounted on a support (16) the position of which with respect to the ground (9) may be regulated.

9. A device for conditioning fodder as in at least one of the Claims 5 to 8, characterized by the fact that the electrodes (17) are mounted on a support (16) the position of which with respect to the cutter mechanism (3) may be regulated.

10. A device for conditioning fodder as in at least one of the Claims 1 to 9, characterized by the fact that the electrodes (17) are mounted on a support (16) which can turn about an axis (21) which extends transversely to the direction (7) of advance and is higher than the support.

11. A device for conditioning fodder as in Claim 10, characterized by the fact that the support (16) can pivot about the axis (21) in a direction opposite to the direction (7) of advance, against a spring (65).

12. A device for conditioning fodder as in Claim 10 or 11, characterized by the fact that the pivoting of the support (16) about the axis (21) in the direction (7) of advance is limited by a stop (68).

13. A device for conditioning fodder as in at least one of the Claims 1 to 12, characterized by the fact that the electric current which is necessary to it is supplied by an alternator (33) integrated into the said device.

14. A device for conditioning as in Claims 5 and 13, characterized by the fact that the alternator (33) is driven by the means of driving the cutter mechanism (3).

**Patentansprüche**

1. Futteraufbereitungsvorrichtung (2) mit einer gewissen Anzahl von Elektroden (17), die quer zur Bewegungsrichtung (7) des Futters angeordnet sind und mit einem Steuerungssystem (31, 290, ..., 298) verbunden sind, wobei diese Elektroden (17) zur Erzeugung eines Funken- oder Kraftfeldes durch welches das zu aufbereitende Futter durchfliesst, geeignet sind, dadurch gekennzeichnet,

   a) dass die Elektroden (17) in Elektrodengruppen (280, ..., 288) aufgeteilt sind und inerhalb einer jeder Gruppe parallel verbunden sind ;

   b) dass das Steuerungssystem mehrere Zellen (541, 542, 543) aufweist, wovon jede Kapazitäten (431, ..., 435, 491, ..., 495, 501, ..., 505) enthält, die mittels Dioden (441, ..., 445) geladen und dann nacheinander mittels Thyristoren (451, ..., 455) entladen werden, sowie mehrere Spulen (290, ..., 298) in welche sich die Zellen (541, 542, 543), die je mittels einer Phase (561, 562, 563) einer Spannungsquelle mit mehreren untereinander verschobenen Phasen versorgt sind, nacheinander entladen ; und

   c) dass jede Spule (290, ..., 298) mit einer respektiven Elektrodengruppe (280, ..., 288) verbunden ist um dieser Elektrodengruppe mehrmals in einer Periode die nötigen Spannung zur Herstellung der Funken und/oder elektrischen Entladungen zu versorgen.

2. Futteraufbereitungsvorrichtung nach Anspruch 1, dadurch gekennzeichnet, dass jede Zelle (541, 542, 543) mehrere Kapazitätsgruppen ((431, 491, 501), ... (435, 495, 505)) aufweist, die je mittels einer respektiven Diode (441, ..., 445) geladen, und nacheinander mittels einem respektiven, mittels einem Steuerungswiderstand gesteuerten Thyristoren (451, ..., 455) entladet sind, wobei jede Kapazität (431, ..., 435), (491, ..., 495) und (501, ..., 505) der Kapazitätsgruppen sich in eine Spulengruppe (290, ..., 292), (293, ..., 295) und (296, ..., 298) in welcher die Spulen parallel verbunden sind, entladet.

3. Futteraufbereitungsvorrichtung nach Anspruch 2, dadurch gekennzeichnet, dass das Steuerungssystem fünf Thyristoren (451, ..., 455) pro Zelle (541, 542, 543) aufweist, wenn er mittels einer 50 Herz Wechselstromspannung versorgt wird.

4. Futteraufbereitungsvorrichtung nach Anspruch 2 oder 3, dadurch gekennzeichnet, dass jede Spulengruppe drei Spulen aufweist.

5. Futteraufbereitungsvorrichtung nach mindestens einem der Ansprüche 1 bis 4, dadurch gekennzeichnet, dass sie mit einer Mähvorrichtung (3) gekuppelt ist.

6. Futteraufbereitungsvorrichtung nach Anspruch 5, dadurch gekennzeichnet, dass sie sich vor der Mähvorrichtung (3) erstreckt.

7. Futteraufbereitungsvorrichtung nach Anspruch 6, dadurch gekennzeichnet, dass sie das Futter aufbereitet bevor es von der Mähvorrichtung (3) geschnitten wird.

8. Futteraufbereitungsvorrichtung nach mindestens einem der Ansprüche 1 bis 7, dadurch gekennzeichnet, dass die Elektroden (17) auf einem gegenüber dem Boden (9) verstellbaren Halter (16) befestigt sind.

9. Futteraufbereitungsvorrichtung nach mindestens einem der Ansprüche 5 bis 8, dadurch gekennzeichnet, dass die Elektroden (17) auf einem gegenüber der Mähvorrichtung (3) verstellbaren Halter (16) befestigt sind.

10. Futteraufbereitungsvorrichtung nach mindestens einem der Ansprüche 1 bis 9, dadurch gekennzeichnet, dass die Elektroden (17) auf einem Halter (16) befestigt sind, der um eine sich quer zur Fahrtrichtung (7) und höher als der Halter erstreckende Achse (21) schwenkbar ist.

11. Futteraufbereitungsvorrichtung nach Anspruch 10, dadurch gekennzeichnet, dass der Halter (16) in einer der Fahrtrichtung (7) entgegengesetzte Richtung um die Achse (21) gegenüber die Wirkung einer Feder (65) schwenkbar ist.

12. Futteraufbereitungsvorrichtung nach Anspruch 10 oder 11, dadurch gekennzeichnet, dass das Schwenken des Halters (16) um die Achse (21) in Fahrtrichtung (7) mittels einem Anschlag (68) begrenzt ist.

13. Futteraufbereitungsvorrichtung nach mindestens einem der Ansprüche 1 bis 12, dadurch gekennzeichnet, dass der nötige Strom mittels einem eingebauten Wechselstromgenerator erzeugt wird.

14. Futteraufbereitungsvorrichtung nach den Ansprüche 5 und 13, dadurch gekennzeichnet, dass der Wechselstromgenerator (33) durch die Antriebsmitteln der Mähvorrichtung (3) angetrieben wird.

FIG.1

FIG. 2

FIG.3

FIG.4

FIG.5

3

FIG.6

FIG.7